# EUROPEAN PATENT SPECIFICATION

(11) **EP 2 200 226 B1**
(45) Date of publication and mention of the grant of the patent: **16.01.2013**
(21) Application number: 08783810.8
(22) Date of filing: 30.07.2008
(51) Int. Cl.: H04L 12/70, H04L 29/06

(54) **METHOD, SYSTEM AND DEVICE FOR BEARER RESOURCE RESERVATION**
VERFAHREN, SYSTEM UND VORRICHTUNG ZUR RESERVIERUNG VON TRÄGERRESSOURCEN
PROCÉDÉ, SYSTÈME ET DISPOSITIF DE RÉSERVATION DE RESSOURCE SUPPORT

(30) Priority: 06.08.2007 CN 200710140146; 25.12.2007 CN 200710305330
(43) Date of publication of application: 23.06.2010
(73) Proprietor: Huawei Technologies Co., Ltd., Longgang District, Shenzhen Guangdong 518129 (CN)
(72) Inventor: YANG, Weiwei, Shenzhen Guangdong 518129 (CN)
(74) Representative: Thun, Clemens
(86) International application number: PCT/CN2008/071817
(87) International publication number: WO 2009/018756

(56) References cited:
- WO-A1-03/081852
- WO-A1-2005/036833
- CN-A- 1 469 605
- CN-A- 1 855 897
- CN-A- 1 968 258
- US-A1- 2003 235 184
- CHANG J-C ET AL: "Application-Layer Conference Trees for Multimedia Multipoint Conferences Using Megaco/H.248" IEEE TRANSACTIONS ON MULTIMEDIA, IEEE SERVICE CENTER, PISCATAWAY, NJ, US LNKD- DOI:10.1109/TMM.2005.843344, vol. 7, no. 5, 1 October 2005 (2005-10-01) , pages 951-959, XP011139274 ISSN: 1520-9210
- "Gateway control protocol: Version 3 ; H.248.1 (09/05)- series H : Audiovisual and multimedia systems - Infrastructure of audiovisual services - Communication procedures" ITU-T STANDARD IN FORCE (I), INTERNATIONAL TELECOMMUNICATION UNION, GENEVA, CH, no. H.248.1 (09/05), 13 September 2005 (2005-09-13), XP017404787
- EDITOR H 248 55: "Updated draft new ITU-T Recommendation H.248.55 Pull Mode Packages (Ed. 0.9)", INTERNET CITATION, 6 July 2007 (2007-07-06), pages 1-24, XP002617535, Retrieved from the Internet: URL:http://wftp3.itu.int/av-arch/avc-site/ 2005-2008/0706_Gen/H248_55_outp ut.zip [retrieved on 2011-01-20]

## Description

### FIELD OF THE INVENTION

The present invention relates to the field of the computer and communication network technologies, and in particular, to a method, system and apparatus for reserving bearer resources in the architecture with the service separated from the bearer.

### BACKGROUND

The Resource ReSerVation Protocol (RSVP) is a network control protocol which provides a mechanism for reserving path resources. The bearer path created through the RSVP in an IP network has the bandwidth and router resources that meet the requirements of service data streams.

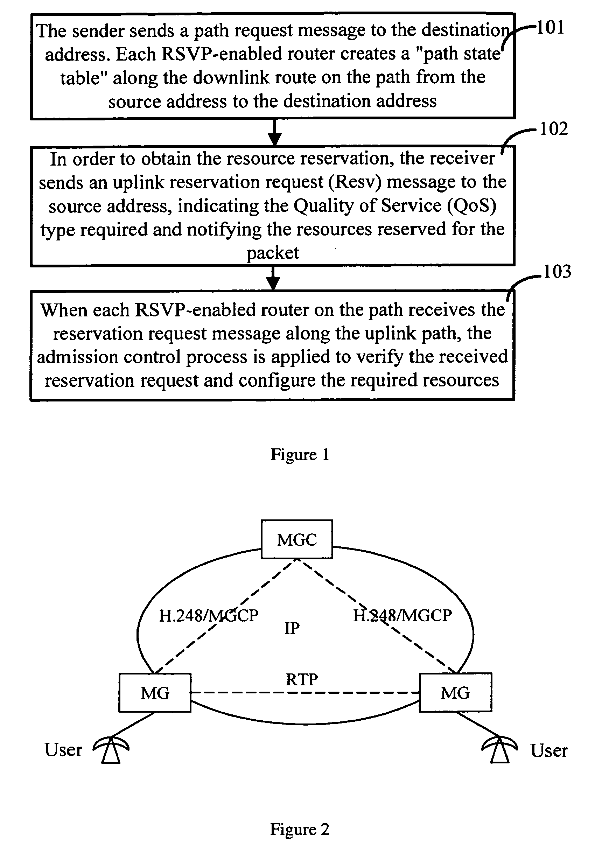

The basic working principles of the RSVP are as shown in Figure 1, including the following steps:

Step 101: The sender sends a path request message to the destination address. Each RSVP-enabled router creates a "path state table" along the downlink route on the path from the source address to the destination address.

Step 102: In order to obtain the resource reservation, the receiver sends an uplink reservation request (Resv) message to the source address, indicating the Quality of Service (QoS) type required and notifying the resources reserved for the packet, for example, transport protocol and port ID.

Step 103: When each RSVP-enabled router on the path receives the reservation request message along the uplink path, the admission control process is applied to verify the received reservation request and configure the required resources.

If this reservation request is not satisfied, the router returns a reservation error (ResvErr) message to the receiver. If the reservation request is satisfied, the router sends an uplink reservation request message to the next router. When the last router receives and accepts the reservation request message, the last router sends a reservation confirmation (ResvConf) message to the receiver.

Through the foregoing process, a bear path from the data sender to the receiver is created, and each router on the path reserves resources for incoming data transmission.

The MGC and the MG are two key components in a packet-switched network. The MGC is responsible for the call control function, and the MG is responsible for the service bearer function. In this way, the call control plane is separated from the service bearer plane, the network resources are sufficiently shared, and equipment upgrade and the service extension are simplified, and the costs of development and maintenance are slashed.

Figure 2 shows the network architecture composed of the MGC and the MG. The MGC is responsible for the call control function, and the MG is responsible for the service bearer function. The MGs interact with each other through the Real-time Transport Protocol (RTP). The gateway control protocol is a main protocol for communication between the MG and the MGC. The currently prevalent gateway control protocols include the H.248/Gateway Control Protocol (MeGaCo) and the Media Gateway Control Protocol (MGCP).

In the process of reserving bearer resources joined by both MG and MGC in the prior art, some defects exist, which makes the process imperfect and disrupts the session creation.
D1: US 2003/235184 A1 discloses a communication system provides in-band speaker arbitration in a multi-participant communication session by use of RTP floor control messages that include a speaker arbitration command embedded in a data packet header extension.
D2: "Application-Layer Conference Trees for Multimedia Multipoint Conferences Using Megaco/H.248" proposes a new approach to establishing application layer conference trees fro multimedia multipoint conferences on the Internet using Megaco/H.248 protocol, a Voice over IP (VoIP) media gateway control protocol.
D3: "Gateway control protocol: Version 3; H.248.1 (09/05)-series H: Audiovisual and multimedia systems-Infrastructure of audiovisual services-Communication procedures", ITU-T STANDARD IN FORCE (I), INTERNATIONAL TELECOMMUNICATION UNION, GENEVA, CH, no.H.248.1 (09/05), 13 September 2005 (2005-09-13)
D4: EDITOR H 248 55: "Updated draft new ITU-T Recommendation H.248.55 Pull Mode Packages (Ed. 09)", INTERNET CITATION, 6 July 2007 (2007-07-06)

### SUMMARY

Accordingly, embodiments of the present invention put forward a method for controlling bearer resources, a system for controlling bearer resources, a method for creating a session, an MG, and an MGC in order to improve the bearer resource control effectively in the architecture with the service separated from the bearer.

A method for reserving bearer resources in an embodiment of the present invention includes:
receiving, by a media gateway, MG, an instruction carrying address resource from a media gateway controller, MGC, wherein the address resource is carried in an event parameter;
allocating the address resource for receiving bearer request messages on the root termination of the MG; and
receiving, by the MG, the bearer request messages sent to the address resource, and reporting the corresponding bearer request event to the MGC; wherein the address resource comprises an Internet Protocol, IP, address, and a port,. wherein before receiving, by the MG, the bearer request messages sent to the address resource, the method further comprises: reporting, by the MG, the address resource allocated for receiving the bearer request messages on the root termination to the MGC; and sending, by the MGC, the address resource to a Customer Premises Equipment, CPE, or a network device which sends the bearer request messages. The event parameter comprises a Bearer Request Address Value (brav) parameter and a Bearer Request Port Value (brpv) parameter. The brav parameter is defined to indicate the IP address, and the format of the brav parameter is a string list. The brpv parameter is defined to indicate the port, and the format of the brpv parameter is a string list.

A system for reserving bearer resources in an embodiment of the present invention includes an MG and an MGC, where:
the MG is adapted to allocate an address resource for receiving bearer request messages on the root termination of the MG, receive the bearer request message sent to the address resource, and report the corresponding bearer request event to the MGC according to the received instruction for detecting the bearer request event; and
the MGC is adapted to send an instruction for detecting the bearer request event to the MG; wherein the MGC is further adapted to send an instruction for allocating the address resource, and the MG is adapted to allocate the address resource according to the instruction, the address resource is carried in an event parameter of the instruction, and the address resource comprises an Internet Protocol, IP, address, and a port,. The MG is configured to report the address resource to the MGC; and the MGC is configured to send the address resource to a Customer Premises Equipment, CPE, or a network device which sends the bearer request messages. The event parameter inlcudes a Bearer Request Address Value (brav) parameter and a Bearer Request Port Value (brpv) parameter. The brav parameter is defined to indicate the IP address, and the format of the brav parameter is a string list. The brpv parameter is defined to indicate the port, and the format of the brpv parameter is a string list.

The foregoing technical solution reveals that: by allocating and reserving address resource on the MG, the MG and the MGC may receive bearer messages correctly before the resources required for the incoming session are created, thus making decision and response in time and supporting and perfecting the transmission resource control and the border gateway control in the Next Generation Network (NGN). The technical solution under the present invention is applicable to the bearer resource control in the architecture with the service separated from the bearer.

### BRIEF DESCRIPTION OF THE DRAWINGS

Figure 1 shows the working principles of the RSVP in the prior art;

Figure 2 shows the network architecture composed of the MGC and the MG in the prior art;

Figure 3 is a flowchart showing that the MGC and MG create a bearer path for the session according to a first embodiment of the present invention;

Figure 4 is a schematic diagram of creating an ephemeral termination on the MG in the process shown in Figure 3;

Figure 5 shows the resource and admission control architecture in an application scenario according to an embodiment of the present invention;

Figure 6 is a resource control diagram of the push mode and pull mode of the resource and admission control architecture shown in Figure 5;

Figure 7 shows the QoS resource control process initiated by the Customer Premises Equipment (CPE) in the context-less pull mode according to a second embodiment of the present invention;

Figure 8 shows the QoS resource control process initiated in the context-less pull mode according to a third embodiment of the present invention;

Figure 9 shows the internal structure of an MG according to an embodiment of the present invention; and

Figure 10 shows the internal structure of an MGC according to an embodiment of the present invention.

### DETAILED DESCRIPTION

In some application scenarios of creating a session, the CPE may initiate the bearer-layer negotiation first, and then initiate or never initiate the service-layer negotiation. In this case, due to unpredictability of session requests and availability of bearer resources, it is difficult for the MG and MGC to obtain the resources required by the session. Therefore, it is impossible to create and reserve necessary resources for the incoming session before receiving the bearer request message, which also makes the MG unable to receive the bearer request message from the CPE correctly and disrupts the creation of the bearer session.

In order to make the embodiments of the present invention clearer, the MGC and MG are described below by taking the H.248 protocol as an example. Various resources on the MG are abstractly represented by terminations. Terminations are categorized into physical terminations and ephemeral terminations. Physical terminations are physical entities which exist semi-permanently, for example, Time Division Multiplex (TDM) channels. Ephemeral terminations represent the public resources which are requested temporarily and transmitted soon after being used, for example, Real-time Transport Protocol (RTP) streams. Moreover, a root termination is used to represent the entirety of the MG. The combinations among terminations are abstractly represented by contexts. A context may include multiple terminations. Therefore, topology is used to describe the interrelations between terminations. The termination not related to other terminations is contained by a special context called "null" .

Based on an abstract model such as the foregoing protocol, the call routing is actually an operation on the termination and the context. Such operations are performed through commands, requests and responses between the MGC and the MG. Command types include: Add, Modify, Subtract, Move, AuditValue, AuditCapabilities, Notify, and ServiceChange. Command parameters, also known as descriptors, are categorized into Property, Signal, Event, and Statistic. The parameters with service relevance are logically aggregated into a package.

When the CPE or another network entity sends a bearer-layer bearer request to the MG, the MG and MGC may have not allocated relevant bearer resources (for example, context, and termination) to the resource session initiated by the entity. In this case, technical means may be used to reserve or allocate relevant address and termination information on the MG, and such information serves as address resource for the MG to receive bearer request messages, that is, information about the destination of the bearer request sent by the CPE, thus creating a bearer path between the CPE and the MG.

The implementation methods include the following:

(i) A property parameter is extended to indicate the address resource for receiving bearer request messages on the MG.

For ease of description, the property extended in this embodiment is called "Bearer Connection Address (BCA)". This property parameter may be included in an existing or newly developed package.

This parameter is defined on the ROOT termination on the MG as a property parameter of the gateway. The value of the parameter may be an IP address, port, or the corresponding network domain information. After the BCA property parameter is configured, the MG reports the completion of configuring the BCA property parameter to the MGC, and the MGC notifies the information (including the address resource) carried in the BCA property to the CPE or another network entity.

By using the address (or address and port) in the address resource included in the BCA as a destination, the CPE or another entity constructs a bearer request message, and sends a bear-layer bearer request to the MG. After the MG receives the bearer request message sent to the destination address on the bearer layer, the ROOT termination of the MG may use an H.248-based Notify message to report the detected bearer request event to the MGC, requesting the MGC to determine the relevant policy.

The format of the parameter BCA may be a string list. The parameters contained in each string instance or element in the list include domain indication and the corresponding address resource. For example, the format may be "domain indication: address: port", where the "domain indication" field may include one or more entries of domain information; the "address" field may be an address in the IPv4 or IPv6 format; and the "port" field includes the corresponding port information. Moreover, certain parts in the foregoing parameters may be replaced with the "random ($)" wildcard if they are not a concern. The "domain information" may be an Internet Protocol (IP) domain, Virtual Private Network (VPN), Multi-Protocol Label Switching (MPLS) network, Asynchronous Transfer Mode (ATM) network, or another network domain, or combination thereof, where the IP domain is subdivided into IPv4 private network, IPv4 public network, and IPv6 network. The "IP domain" mentioned herein refers to different IP networks connected with the MG. Generally, an MG is connected with multiple IP networks concurrently. Therefore, in the practical application of this method, the MG allocates an IP address and port to each IP network for the purpose of receiving bearer request messages from each IP network.

An application example is: The MG reserves an address "202.113.0.119" and port "49232" for the IP domain "mynet.net" to receive bearer request messages. Therefore, the BCA property parameter may be represented by xxx/bca="mynet.net:202.113.0.119:49232", where "xxx" indicates the name of package that includes the BCA.

The BCA parameter may be implemented in the following three methods:

1. The MGC instructs the MG to allocate the relevant address. The specific value is carried in the BCA property parameter, and the MG allocates the specific address as indicated by this parameter.

2. The MGC instructs the MG to allocate the relevant address, without giving the specific value. The MG allocates the address.

3. The value of the BCA parameter is configured on the MG, without being indicated by the MGC. When the MGC needs to obtain the specific value of this parameter on the MG, the specific value may be obtained through auditing.

In order to clarify the option of the BCA property value, a property may be defined, for example, a property named "Request Bearer Connection Address (RBCA)", which may be included in the same package that contains the foregoing extended BCA property parameter. The values of the RBCA property include "Explicit" and "Implicit". "Explicit" means that the MGC instructs the MG to reserve the address resource indicated by the BCA; and "Implicit" means that the MG allocates the address.

If the MGC assigns the value "Explicit" to the RBCA property and sends it to the root termination of the MG and the BCA property parameter needs to be sent, the MG is required to reserve the address and port carried in the BCA property as the address for receiving bearer messages as indicated by the MGC. If the MGC assigns the value "Implicit" to the RBCA property and sends it to the root termination of the MG, the MG is required to decide the address and port discretionarily according to the default value.

When the MGC needs to instruct the MG to allocate and reserve the relevant address resources for receiving the bearer request messages on the bearer, the foregoing BCA property parameter may be set in the command request sent to the MG, if the MGC expects the MG to indicate the address resource to be reserved clearly. In this case, the MGC may not send the RBCA property at the same time, indicating that the MGC requires the MG to reserve the address resource included in the BCA property. If the MGC only expects the MG to reserve the relevant address without indicating the address resource clearly, the MGC sends an RBCA property to the MG, where the value of the RBCA property is "implicit". In this case, the MGC may not send the BCA property at the same time, indicating that the MG decides the address resource discretionarily. The command response returned by the MG carries the allocation result to the MGC. In the two circumstances, if the resource is reserved successfully, a "normal" response is returned; if the resource is reserved unsuccessfully, an "error" response is returned, carrying the corresponding error code and/or error description text. For example, "510 Insufficient Resource" means the resource is insufficient.

For the IP domain served by each MG and MGC, the MG may use the specific IP address and port ID throughout the operation process to receive the bearer request message, where the bearer request message is constructed by using the address (or address and port) in the address resource included in the BCA as a destination. Alternatively, the address resource may be changed halfway, but the MG needs to notify the MGC of the relevant address resource in time. The MGC may change the corresponding parameter value information by indicating the new BCA parameter to the MG.

Meanwhile, the MGC may also audit the property through the root termination specific to the MG, thus obtaining the information about the address resource reserved for receiving bearer messages on the MG.

(ii) By modifying the flow description parameter of the root termination on the MG, the MGC reserves address and port information on the root termination to receive bearer messages.

The bearer message flow received on the root termination of the MG is regarded as a flow in the H.248. Through the Modify command, the MGC may use a local descriptor and a remote descriptor to reserve relevant bearer resource for the data stream. The bearer resource includes at least address and/or port information. The local descriptor uses Session Description Protocol (SDP) information to instruct the MG to allocate or reserve the receiving address and/or port for the purpose of receiving streams. After allocating the relevant information, the MG sends a response message which carries the information on the allocated address resource to the MGC. Meanwhile, the MGC may set the Mode property of the data stream to "RecvOnly" (reserve only) or "SendRecv" (send and receive), thus getting ready for the incoming bearer message.
(iii) A context is created on the MG. An ephemeral termination is added into the context. The MG allocates an IP address and/or port ID to the ephemeral termination for the special purpose of receiving the request messages on the bearer path before the session bearer resource is created.

The creation of the context and termination may be executed after the MG is registered successfully at the MGC, or after the MGC receives the relevant service-layer session information, but must be finished before the CPE or another network entity sends a request message.
The MGC instructs the MG to create an ephemeral termination through an Add request message. The MG needs only to allocate the resource (for example, IP address, and/or port ID) for receiving bearer-layer request messages, and the resource information is carried in the Add response message to the MGC. After receiving the address resource allocated by the MG for the termination, the MGC may send the relevant information to the CPE or other network entities through a signaling message (for example, Diameter or SIP message) of the service layer. With the relevant information, the CPE or another entity may send a bearer request related to the bearer path to the MG.
Unlike the context and termination created for the resource session, the ephemeral termination created here is not necessarily used for receiving media data. It is only a transition and bridge in the process of creating the resource session. That is, once accepting the bearer request on the bearer layer, the MGC and MG create required contexts and termination resources for the session according to the requirements of the resource session and the policy rules, without using the ephemeral termination any longer.
After receiving the bearer request message from the bearer, the ephemeral termination uses an H.248-based Notify message to report the detected bearer request event to the MGC, requesting the MGC to decide the relevant policy.
The life of the ephemeral termination may be long or short. It may be independent of the specific session, namely, existent throughout the normal operation process of the MG after the ephemeral termination is created, and the ephemeral termination is used to receive the bearer request message before any session bearer resource is allocated or created. Alternatively, the ephemeral termination serves a specific session or period; once the MGC and MG receive a bearer request message, the MGC may instruct the MG to delete the ephemeral termination, whereupon the ephemeral termination may be created again as required.

(iv) The corresponding event parameter is extended to represent the address resource for receiving the bearer resource on the MG. The address resource may include: domain indication, IP address or port, or combination thereof.

For ease of description hereunder, the parameter extended in this embodiment is called "Bearer Request Address (BRA)". This parameter may be included in the existing or new bearer request event, for example, in a Resource Decision Request for QoS Resource Reservation (RDRR) event based on the H.248.55.

The specific format of the BRA may be a string list. The parameters contained in each string instance or element in the list include domain indication and the corresponding address resource. For example, the format may be "domain indication: address: port", where the "domain indication" field may include one or more entries of domain information; the "address" field may be an address in the IPv4 or IPv6 format; and the "port" field includes the corresponding port information. Moreover, certain parts in the foregoing parameters may be replaced with the "random ($)" wildcard if they are not a concern. As mentioned above, the "domain information" may be an IP domain, VPN, MPLS network, ATM network, or another network domain, or combination thereof, where the IP domain is subdivided into IPv4 private network, IPv4 public network, and IPv6 network. Generally, an MG is connected with multiple IP network domains concurrently. Therefore, in the practical application of this method, the MG allocates an IP address and port to each network domain or several network domains for the purpose of receiving bearer request messages from the network domain.

An application example is: The MG reserves an address "202.113.0.119" and port "49232" for the IP domain "mynet.net" to receive bearer messages. Therefore, the BRA parameter may be represented by xxx/bca="mynet.net:202.113.0.119:49232", where "xxx" indicates the name of event that includes the BRA.

Nevertheless, the foregoing parameter information may be split into several parameters. For example, separate event parameters are defined for the domain indication, IP address, and port respectively: A "Bearer Request Realm Value (BRRV)" parameter is defined to indicate the domain for receiving the bearer message; a "Bearer Request Address Value (BRAV)" parameter is defined to indicate the address for receiving bearer messages on the MG; a "Bearer Request Port Value (BRPV)" parameter is defined to indicate the port for receiving bearer request messages on the MG. The format of the foregoing parameters may be a string list. The parameter included in each string instance or element in the list is the corresponding address resource. When the parameter includes information about multiple address resources, the contents contained in the foregoing three parameters should correspond to each other. For example, the contents may be aligned sequentially; if the sequence of the BRRV values is domain 1, domain 2, and domain 3, the values of the BRAV and BRPV are the addresses allocated for domain 1, domain 2, and domain 3 accordingly.

When the MGC sends a bearer request event (for example, a Pull Mode (PLM) Package or RDRR event) to the MG and the event carries the foregoing event parameters, the MG needs to allocate the corresponding address resource (for example, IP address and port) to the incoming bearer request message. The MG sends a response message carrying the information on the allocated address to the MGC.

Moreover, when sending the event detection instruction, the MGC may also specify the value of the address resource parameter, instructing the MG to reserve the corresponding address resource as indicated by the MGC.

Not all the foregoing extended parameters necessarily occur in the relevant event or property at the same time. The specific parameters included in the Event or Property depend on the actual need. Nevertheless, more parameter information may be included.

Through any of the foregoing methods, the MGC and the MG allocate and reserve the address and/or port information for the bearer-layer request messages. In the practical application, the address and/or port information may be allocated and reserved for the request messages on the bearer layer in other ways than the foregoing methods. The present invention does not limit the method of allocating and reserving address and/or port information. After receiving the service-layer negotiation signaling from the CPE or other network entities, the MGC may send a response to the sender of the information on the reserved address resource for the purpose of sending a bearer-layer request message if the MGC is not ready or able to create the bearer resources required for the session. According to the received MG address resource, the CPE or another network entity constructs and sends a bearer-layer bearer request message.

After the MG receives the request message on the bearer, if multiple terminations share the address concurrently but the port information is different, one or more of the terminals may be the true termination created for receiving and sending media data for the session. In this case, the MG needs to determine the specific termination (ephemeral termination or root termination) for handling the request message. The MG may determine the specific termination in the following way:

The MG identifies the termination according to the destination address source information in the request message and the address scope handled on each termination or the matching result of the domain information. If an exactly matching ephemeral termination exists, the ephemeral termination handles the request message and reports it to the MGC. If no exactly matching ephemeral termination exists, the root termination represented by the reserved address in the foregoing method or the ephemeral termination for the special purpose of receiving bearer request messages is used for handling the request message and reporting it to the MGC.

Alternatively, the information on the destination address and port ID is retrieved from the request message, and the termination information is matched with the port ID. If an exactly matching ephemeral termination exists, the ephemeral termination handles the request message and reports it to the MGC. If no exactly matching ephemeral termination exists, the root termination represented by the reserved address in the foregoing method or the ephemeral termination for the special purpose of receiving bearer messages is used for handling the request message.

The request message on the bearer layer may be an RSVP request message, or another bearer signaling protocol message such as Next Steps in Signaling (NSIS) message.

Through the foregoing method, a redirection step is added in the process of creating the session. Taking the Pull mode of resource control as an example, the process includes the following steps:
the MGC receives the request message on the service layer, and sends a response message that carries the information on the address and port for the special purpose of receiving bearer request messages on the MG;
the MG receives the bearer-layer bearer request message on the address and port, and reports the relevant bearer request event to the MGC;
the MGC authorizes the bearer request, and instructs the MG to create necessary bearer resources (for example, context, termination) for the session, where the request carries the relevant source information to the session originator (for example, CPE); and
the CPE sends the bearer creation request (for example, RSVP Path request) to the termination created for receiving and sending data on the MG again.

The process of implementing the technical solution under the present invention is expounded below with reference to some embodiments.

### Embodiment 1

Through the foregoing method, the MGC and MG allocate and reserve the IP address and port on the MG, thus facilitating receiving of incoming bearer request messages on the bearer path and creating a bearer path with ensured resources for the session.

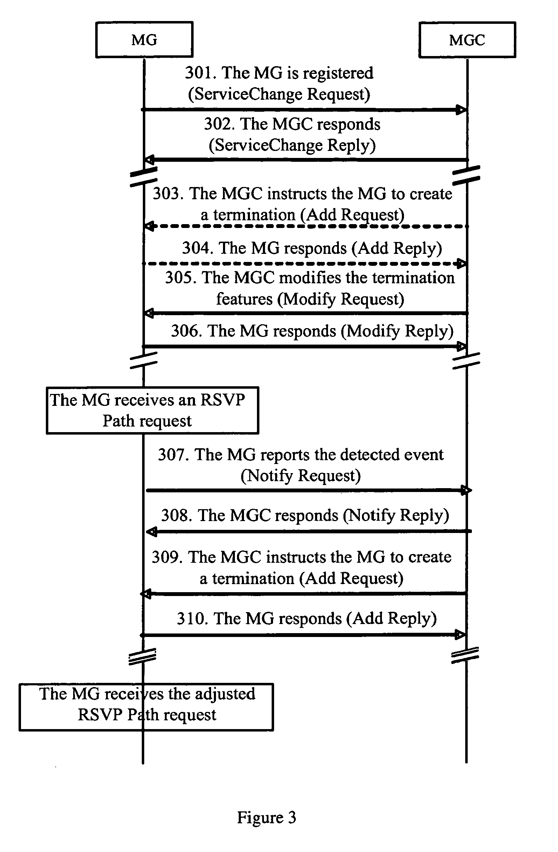

In this embodiment, the process of the MGC and MG creating a bearer path for the session includes the following steps, as shown in Figure 3:

Step 301: Through a ServiceChange request message, the MG sends a registration request to the MGC, indicating availability of the resources of the MG.

Step 302: The MGC sends a ServiceChange response message carrying a registration response to the MG.

Step 303: Through an Add request message, the MGC instructs the MG to create a new context, adds an ephemeral termination into the context, and allocates the address and port for the ephemeral termination for the purpose of receiving the incoming bearer request message. The objective of creating the context and termination is that the MG may receive the bearer request message on the bearer layer before the MGC and MG create and allocate the relevant resources for the media data streams of certain session(s). Therefore, the created ephemeral termination is for the special purpose of receiving the request message on the bearer layer before the session resource is created, without being used for receiving or sending media in the real-time session. The MGC and MG do not need to allocate too many resources for them and need only to allocate the address and port required for receiving request messages on the bearer layer.

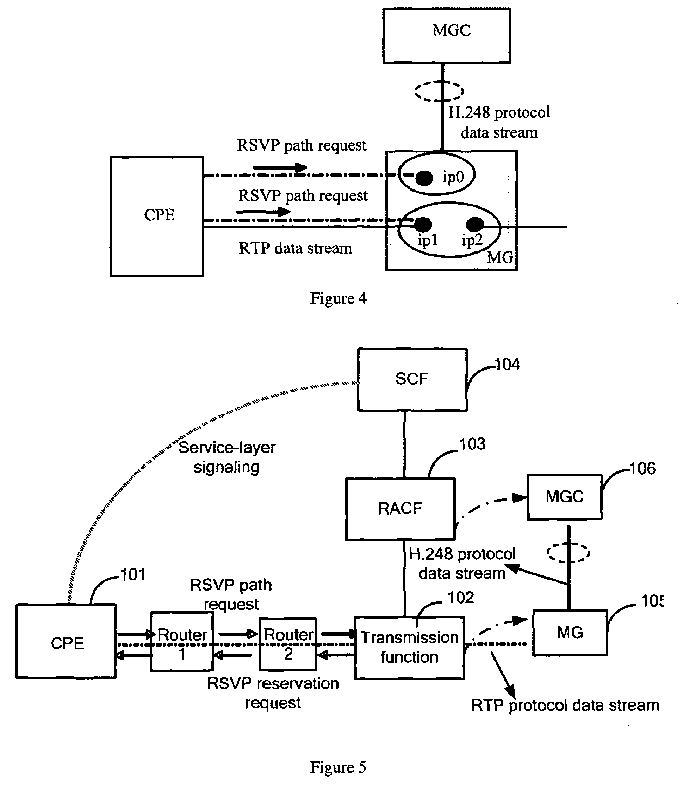

Step 304: The MG allocates resources to the created ephemeral termination, and sends an Add response message to the MGC, the message carrying the IP address and port ID of the ephemeral termination. As shown in Figure 4, the MG creates an ephemeral termination ip0 according to the request. After receiving the information on the address resource of the termination created by the MG, the MGC may send the relevant information to the CPE or other network entities through a signaling message (for example, Diameter or SIP message) of the service layer. The relevant information is used for sending a bearer request related to the bearer path.

In step 303 and step 304, the foregoing third mode (namely, the address resource for receiving bearer requests is reserved by creating an ephemeral termination) is applied. In the practical application, the foregoing first and second modes may be applied instead, namely, the address resource for receiving bearer request messages is reserved by extending the MG attribute parameter or modifying the flow description parameter on the root termination, the details of which are similar to the foregoing description and not repeated here any further. Therefore, step 303 and step 304 in Figure 3 are optional, and represented by dotted lines.

Step 305: The MGC sends a Modify request message to the MG. The Modify request message carries an instruction for detecting bearer request events to instruct the MG to detect bearer request events on the bearer layer. For example, the request message may be a PLM or RDRR event defined in the H.248.55, or a path request event related to bearer resource reservation. If the address resource is reserved in the third mode, the MGC may also instruct the MG to modify the feature parameter of the created ephemeral termination (for example, ip0 in Figure 4). If the address resource is reserved in the first or second mode, the MGC may also modify the feature parameters of the root termination on the MG.

Step 306: After receiving the detection instruction in the Modify request message, the MG handles as indicated by the MGC and returns a response message to the MGC.

Through the foregoing steps, the MG reserves an address (and port) for receiving the bearer request messages on the bearer, and gets ready for the session creation. The following steps deal with creation of the relevant resource session. Taking the session initiated by the CPE as an example, in order to create a bearer path with ensured resources for the session, the CPE sends a resource path request message (for example, RSVP Path message) to the peer entity (for example, MG in this example). The information on the destination address and port ID in the RSVP Path message is the information on the address resources allocated and reserved in the MG above.

Step 307: The MG receives the RSVP Path message from the CPE, and reports the detected bearer request event to the MGC through a Notify request message, and uses an ObservedEvents parameter to carry the necessary information retrieved from the RSVP Path message. If a termination ip0 is created previously, the ip0 reports the detected event; if no specific termination is created, the root termination reports the detected event.

Step 308: The MGC returns a Notify response message to the MG.

Step 309: After receiving the bearer request event from the MG, the MGC authorizes the session request according to the relevant rules and resource state information. The authorization succeeds, through an Add request message, the MGC instructs the MG to create and allocate resources for the bearer request session, creates a new context, and adds the required ephemeral termination in the context, for example, the IP terminations ip1 and ip2 in Figure 4.

Step 310: The MG allocates resources to the added ephemeral termination, and sends an Add response message to the MGC, the message carrying the IP address of the created ephemeral termination, the applied voice compression algorithm and the port ID.

Unlike the purpose of the termination created in steps 303 and 304, the context and termination resources created in steps 309 and 310 are for the general purpose of receiving and sending media data and relevant signaling messages in the session. After receiving the information on the address allocated to the termination (for example, ip1) on the MG, the MGC may send the information to the CPE or other network entities through a signaling negotiation message on the service layer for the purpose of creating a real-time session.

According to the service-layer message (for example, SIP Update message), the CPE obtains the information on the destination address resource of the session. The information on the destination address resource is the true destination address resource of the session. The CPE compares the destination address resource with the previously obtained address resource. If they are different, an RSVP Path request message on the bearer layer is sent again by applying the lately obtained address resource. The RSVP session on the bearer is identified by the destination address, protocol and port information. Therefore, once an element (for example, destination address) changes, the session becomes a new RSVP session, but reserved resource state information on the bearer path is bound to the session.

The RSVP manages the reservation state on the router and host through a soft state mode. The soft state is created through a path request and a reservation request and refreshed by the foregoing message periodically. In two circumstances, the soft state is deleted: (i) The node (router or host) detects no arrival of the matching refresh message in a given time period (generally 30s); and (ii) the release message (PathTear or ResvTear) arrives. Upon expiry of the refresh time of the soft state of the node or change of a soft state, the RSVP scans the state to be created by the node, and sends the path request and the reservation request refresh message to the subsequent nodes in order to maintain the soft state of each node. In view of the soft state feature of the RSVP protocol, the path state and resource reservation state previously reserved for the previous RSVP session on the path between the CPE and MG are deleted automatically for lack of further update message, thus avoiding waste of resources. Alternatively, the CPE and/or MG may send a resource release message (RSVP PathTear or ResvTear message) proactively after completion of new reservation to delete the relevant path and resource reservation state on the bearer explicitly.

Taking Figure 4 as an example, the CPE sends a new bearer request message (for example, RSVP Path message) to the ip1 to create a bearer path with ensured resource for transmitting session data.

For ease of description, only the message steps closely related to the present invention are listed in this embodiment, and other messages that possibly occur in the real-time session creation process (for example, the step of modifying features of the session termination, and the resource reservation process (RSVP Resv) initiated by the MG) are omitted. The oblique parallel lines on the vertical process lines in Figure 3 indicate omission of steps which are less closely related to the present invention.

### Embodiment 2

Figure 5 shows a resource and admission control architecture of the International Telecommunications Union (ITU). The creation of a real-time communication session generally covers two aspects: (i) service layer negotiation between the CPE 101 and the peer entity through a service-layer entity such as Service Control Function (SCF) 104; and (ii) bearer-layer negotiation between the CPE 101 and the peer entity through a bearer-layer transport entity such as Transport Function (TF) 102. According to the service QoS request transferred by the SCF 104, the Resource and Admission Control Function (RACF) 103 provides policy-based transmission resource control for various applications (for example, SIP call, and video stream) that require Next Generation Network (NGN) transmission resource control, converts the service information to the transmission resource requirements, and commands the TF 102 to decide the policy, thus creating a correlation between the application function and the lower-layer transmission capability. If the interface between the Policy Decision Functional Entity (PD-FE) in the RACF 103 and the Policy Enforcement Functional Entity (PE-FE) in the TF 102 is based on the H.248 protocol, the PD-FE is equivalent to the Media Gateway Controller (MGC) 106 in the H.248 entity, and the PE-FE is equivalent to the Media Gateway (MG) 105 in the H.248 entity.

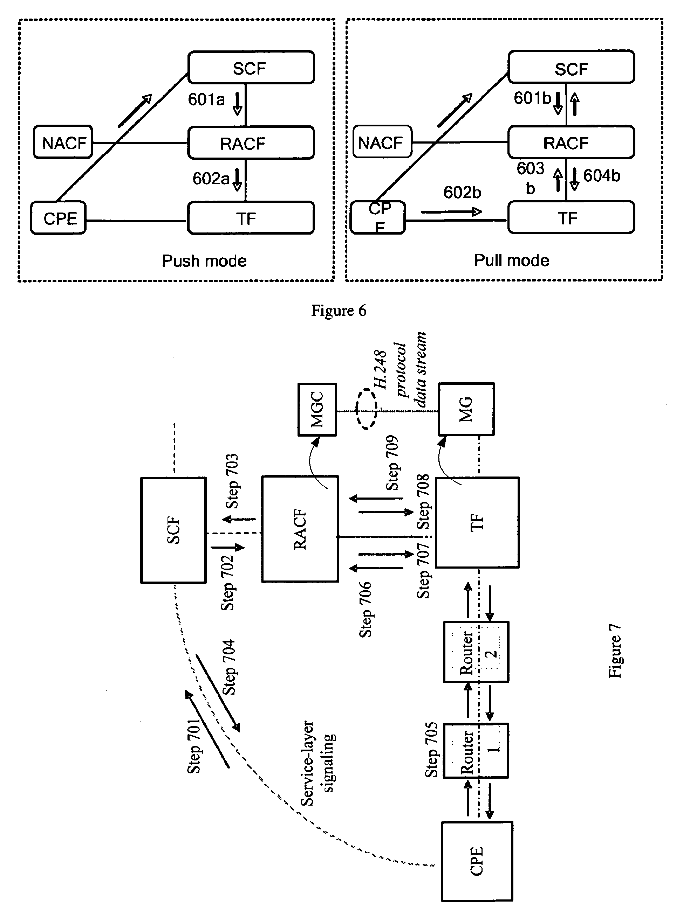

The foregoing resource and admission control architecture supports two resource control modes: push mode, and pull mode. As shown in the left part of Figure 6, the process of implementing the push mode includes the following steps:
Step 601a: The SCF sends a request to the RACF to formulate the authorization and control policy of QoS resources; and
Step 602a: The RACF pushes the policy decision to the TF for executing.

As shown in the right part of Figure 6, the process of implementing the pull mode includes the following steps:
Step 601b: The SCF sends a QoS resource authorization request to the RACF;
Step 602b: The TF receives the QoS signaling message from the bearer layer;
Step 603b: The TF sends a QoS resource reservation request to the RACF; and
Step 604b: The RACF indicates the policy decision to the TF for executing.

The major difference between the two modes lies in selection of the binding mechanism, namely, correlation between the service-layer session and the bearer connection.

The application of the pull mode comes in two circumstances:
a Context-created MG pull mode: After receiving the service-layer negotiation signaling, the MGC interacts with the MG to create bearer resources (for example, IP address and port allocated to the termination) required for receiving and sending media and signaling, and sends the allocated bearer information to the CPE; and
a Context-less MG pull mode: After receiving the service-layer negotiation signaling, the MGC does not interact with the MG to the bearer resources required for the session, but creates the bearer resources after receiving the bearer request messages on the bearer layer.

In the context-created pull mode, the MGC sends the bearer resource information (including the IP address and port of the termination) created for the session in the MG to the CPE through a service-layer signaling message (for example, SIP message). Subsequently, through the resource reservation protocol such as RSVP, the CPE sends an RSVP message (for example, RSVP Path message) to the termination on the MG in order to create a bearer path with ensured resource for the session. However, in the context-less pull mode, before the CPE sends a bearer-layer bearer request to the MG, the MGC and MG create no bearer resource such as relevant context or termination for the resource session initiated by the CPE, and is unable to send the corresponding bearer resource information to the CPE. Consequently, the MG may be unable to receive the bearer request messages which is constructed according to the bearer resource information and sent from the CPE, thus disrupting creation of the bearer session.

This embodiment deals with the QoS resource control process initiated by the CPE in the context-less pull mode in detail below.

This embodiment applies the method under the present invention to the session process. The creation of the session covers negotiation on the service layer and the negotiation on the bearer layer. Before the CPE sends a bearer request, the MGC and MG use the method under the present invention reserve an address and port on the MG for receiving the bearer request messages on the bearer path before the session bearer resource is allocated or created.

Figure 7 shows the processing process of this embodiment in the resource and admission control architecture. The interface between the RACF and TF is based on the H.248 protocol. Therefore, the RACF is equivalent to the MAC in the H.248, and the TF is equivalent to the MG, which are uniformly represented by the names in the resource and admission control architecture below. The process includes the following steps:

Step 700: The TF gets registered at the RACF before initiation of the session. After the RACF is registered successfully, the process of the RACF instructing the TF to create an ephemeral termination for receiving bearer requests may occur, and this process must occur before step 703 in this embodiment.

Step 701: The CPE initiates an application-related service by sending a service request (for example, SIP Invite) to the SCF. This service request may include a definite QoS service requirement or not.

Step 702: The SCF retrieves the relevant QoS service requirement from the request service, and sends an authorization request to the RACF, the request carrying the QoS requirement information.

Step 703: The RACF authorizes the service request based on the network policy rules. If the request is authorized, because no bearer resource is created for the resource session on the TF, the RACF replies to the SCF with the information on the address and port reserved on the TF for the special purpose of receiving bearer-layer bearer request messages. The address resources may be allocated and reserved through the method under the present invention, namely, through extended MG property parameters, modifying the flow description parameter of the root, or creating a special ephemeral termination.

Step 704: Through a service-layer signaling message, the SCF sends the information on the address and port for the special purpose of receiving bearer-layer bearer request messages to the CPE.

Step 705: Through path-related QoS signaling (for example, RSVP Path message), the CPE sends a QoS resource reservation request to the address and port designed for the special purpose of receiving bearer-layer bearer request messages of the TF. The QoS request carries the QoS requirement parameters required by the application service.

Step 706: After receiving the QoS request, the TF compares and matches the destination address and port information in the request message, and the selected termination reports the detected bearer request event to the RACF through a Notify request message, and uses an ObservedEvents parameter to carry the necessary information retrieved from the Path message.

Step 707: The RACF returns a Notify response message to the TF.

Steps 708-709: According to the user specification information, service information, network policy rules and resource state, the RACF decides the resource reservation and admission control policies. If the request is accepted, the RACF sends the resource decision information to the TF, for example, instructs the TF to allocate relevant bearer resources (context and termination) for the session. The TF sends a response message carrying the resource allocation result to the RACF.

Further, the RACF sends the resource negotiation information of the session to the CPE through service-layer signaling. According to the context and termination allocated by the TF for the session, the CPE sends a bearer-layer bearer request (RSVP Path request) to the true destination address of the session again in order to create a bearer path with ensured resources. The CPE or MG may send a definite release message to delete the temporary bearer path previously created between the CPE and the reserved address on the MG.

### Embodiment 3

In the context-less pull mode, the QoS resource control process is implemented through the fourth solution herein (namely, the information on the address resource for receiving bearer messages on the MG is represented by extending the corresponding event parameter).

This embodiment applies the method under the present invention to the session process. The creation of the session covers negotiation on the service layer and the negotiation on the bearer layer. Before the CPE sends a bearer request, the MGC and MG use the method under the present invention reserve an address and port on the MG for receiving the bearer request messages on the bearer path before the session bearer resource is allocated or created.

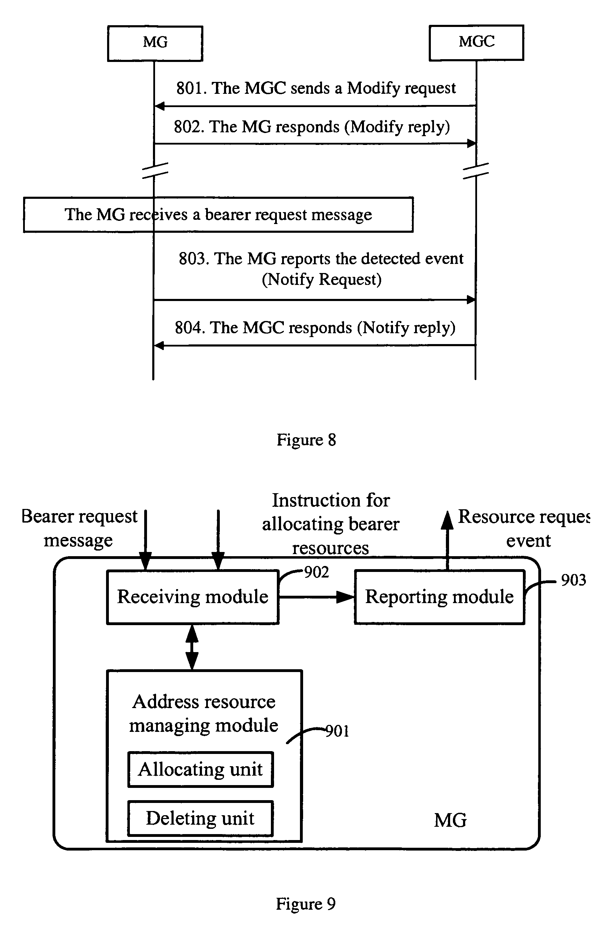

As shown in Figure 8, the process includes the following steps:

Step 801: The MGC sends a Modify request message to the MG. The Modify request message carries an instruction for detecting the bearer request event, for example, a PLM/RDRR event defined in the H.248.55. The instruction for the event carries the relevant parameter information such as "Bearer Request Address Value (BRAV)", and "Bearer Request Port Value (BRPV)". If the value of the BRAV or BRPV parameter is "$", it indicates that the MGC requests the MG to allocate resources for the parameter.
For example, the message format is:

```
        MEGACO/3 [123.123.123.4]:55555
        Transaction = 9999 {
             Context = - {
                  Modify = ROOT {
                      Events = 2222 {plm/rdrr{brav=$, brpv=$}}
                  }
             }
        }
```

Step 802: The MG performs the corresponding operation as indicated by the MGC (for example, allocates the address resource), and sends a Modify response message carrying the information on the allocated address to the MGC.
For example, the message format is:

```
         MEGACO/3 [124.124.124.222]:55555
         Reply = 9999 {
             Context = - {
                  Modify = ROOT {
                      Events = 2222 {plm/rdrr{brav=202.113.0.119, brpv=49232}}
                  }
             }
         }
```

After receiving the response message from the MG, the MGC notifies the CPE of the information on the address allocated for bearer request messages on the MG.

Step 803: The MG receives the bearer request message from the CPE, and reports the detected bearer request event to the MGC through a Notify request message, and uses an ObservedEvents parameter to carry the necessary information retrieved from the bearer request message.

Step 804: The MGC returns a Notify response message to the MG.

Further, the MGC decides the resource reservation and admission control policies according to the relevant policy rules.

As revealed in the foregoing process, the bearer resource control system in an embodiment of the present invention consists of an MG and an MGC, where:
the MG is adapted to allocate an address resource for receiving bearer request messages on the root termination of the MG, receive the bearer request message sent to the address resource, and report the corresponding bearer request event to the MGC according to the received instruction for detecting the bearer request event; and
the MGC is adapted to send an instruction for detecting the bearer request event to the MG. the MGC is further adapted to authorize the receive bearer request event, instruct the MG to create a bearer resource on the termination for receiving and transmitting session data for the session, and send the relevant resource information to the sender of the bearer request. The MG allocates the address resource for receiving bearer request messages on the root termination of the MG according to the instruction for allocating address resources from the MGC, or according to the property parameter configuration of the MG. Alternatively, the MG may allocate an ephemeral termination for the special purpose of receiving bearer request messages.

After allocating the bearer resource for the session, the MG may delete the address resource information according to the resource deletion message from the outside; or delete the address resource information directly.

Figure 9 shows the internal structure of an MG in an embodiment of the present invention. The MG includes the following modules:
an address resource managing module 901, adapted to allocate an address resource for receiving bearer request messages, notify the receiving module 902 of the allocated address resource, and allocate bearer resources according to the received bearer resource allocation instruction;
a receiving module 902, adapted to receive the bearer request message sent to the address resource, send the received bearer request message to the reporting module 903, receive the bearer resource allocation instruction, and send the received bearer resource allocation instruction to the address resource managing module 901; and
a reporting module 903, adapted to generate a bearer request event according to the received bearer request message, and report the generated bearer request event outward to the MGC.

The address resource managing module 901 includes:
an allocating unit, adapted to allocate the address resource for receiving bearer request messages and allocate session bearer resources; and
a deleting unit, adapted to delete the allocated address resource for receiving bearer request messages according to the deletion instruction received by the receiving module or after the bearer resource is allocated successfully.

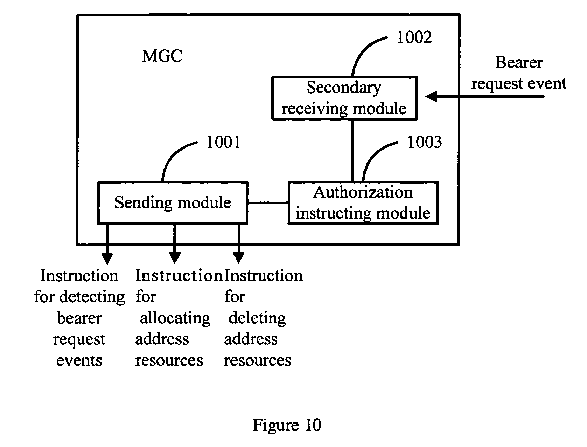

Figure 10 shows the internal structure of an MGC in an embodiment of the present invention. The MG includes the following modules:
a sending module 1001, adapted to send an instruction for detecting bearer request events to the MG, and send an instruction for allocating address resources to the MG;
a secondary receiving module 1002, adapted to receive the reported request event; and
an authorization indicating module 1003, adapted to authorize the receive bearer request event, instruct the MG to create a bearer resource on the termination for receiving and transmitting session data for the session, and send the relevant resource information to the sender of the bearer request.

The authorization indicating module 1003 is further adapted to instruct the MG to delete the allocated address resource for receiving bearer request messages, and the sending module 1001 is further adapted to send the deletion instruction.

A method for creating a session in an embodiment of the present invention includes the following steps:
the MGC receives a request message from the service layer, and returns a response message which carries the information about the address resource for receiving bearer request messages on the MG;
the MG receives the bearer request message sent to the address resource, and reports the corresponding bearer request event to the MGC;
the MGC authorizes the bearer request event, instructs the MG to create a bearer resource for receiving and transmitting session data for the resource session, and sends the relevant resource information to the sender of the bearer request; and
the sender sends the bearer creation request to the MG again.

In this embodiment, the address resource for receiving bearer request messages on the MG is obtained through one of the following modes:
the MG receives the instruction carrying address resource from the MGC, and allocates the address resource as an address resource for receiving bearer request messages on the root termination;
as indicated by the MGC, the MG determines and allocates the address resource for receiving bearer request messages on the root termination according to the preset default value;
the address resource for receiving bearer request messages is configured on the root termination of the MG;
the MG receives the instruction for modifying the flow descriptor parameter on the root termination of the MG from the MGC, and allocates the address resource for receiving bearer request information on the root termination; and
the MG receives an instruction for creating an ephemeral termination from the MGC, creates an ephemeral termination for receiving bearer request messages, and allocates an address resource for receiving bearer request messages to the ephemeral termination.

In the technical solution under the present invention, by allocating and reserving an address and/or port, the MGC and the MG may receive bearer messages correctly before the resources required for the incoming session are created, thus making decision and response in time and supporting and perfecting the transmission resource control and the border gateway control in the NGN. The technical solution under the present invention is applicable to the bearer resource control in the architecture with the service separated from the bearer.

## Claims

1. A method for reserving bearer resources, comprising:
receiving, by a media gateway, MG, an instruction carrying address resource from a media gateway controller, MGC, wherein the address resource is carried in an event parameter;
allocating (801;802) the address resource for receiving bearer request messages on a root termination of the MG; and
receiving, by the MG, the bearer request messages sent to the address resource, and reporting (803) the corresponding bearer request event to the MGC;
wherein before receiving, by the MG, the bearer request messages sent to the address resource, the method further comprises:
reporting, by the MG, the address resource allocated for receiving the bearer request messages on the root termination to the MGC; and
sending, by the MGC, the address resource to a Customer Premises Equipment, CPE, or a network device which sends the bearer request messages;
wherein the address resource comprises an Internet Protocol, IP, address and a port,
**characterized in that**,
wherein the event parameter comprises a Bearer Request Address Value, brav, parameter and a Bearer Request Port Value, brpv, parameter,
wherein the brav parameter is defined to indicate the IP address, and the format of the brav parameter is a string list, and
wherein the brpv parameter is defined to indicate the port, and the format of the brpv parameter is a string list.

2. The method of claim 1, **characterized in that**, the allocating the address resource for receiving bearer request messages on the root termination of the MG comprises:
receiving an instruction for modifying a flow descriptor parameter on the root termination of the MG from the MGC, and allocating the address resource for receiving the bearer request messages on the root termination.

3. A system for reserving bearer resources, comprising a media gateway, MG, and a media gateway controller, MGC, wherein:
the MG is adapted to allocate an address resource for receiving bearer request messages on an root termination of the MG, and receive the bearer request messages sent to the address resource, and report a corresponding bearer request event to the MGC according to a received instruction for detecting the bearer request event;
the MGC is adapted to send an instruction of detecting the bearer request event to the MG; wherein the MGC is further adapted to send an instruction for allocating the address resource, and the MG is adapted to allocate the address resource according to the instruction, the address resource is carried in an event parameter of the instruction, and the address resource comprises an Internet Protocol, IP, address, and a port,;
wherein the MG is configured to report the address resource to the MGC; and the MGC is configured to send the address resource to a Customer Premises Equipment, CPE, or a network device which sends the bearer request messages,
**characterized in that**,
wherein the event parameter comprises a Bearer Request Address Value, brav, parameter and a Bearer Request Port Value, brpv, parameter,
wherein the brav parameter is defined to indicate the IP address, and the format of the brav parameter is a string list, and
wherein the brpv parameter is defined to indicate the port, and the format of the brpv parameter is a string list.

4. The system of claim 3, wherein the MGC is further adapted to authorize for the received bearer request event, and instruct the MG to create a bearer resource for receiving and transmitting session data for a session, and send information of the created bearer resource to the sender of the bearer request messages.

## Patentansprüche

1. Verfahren zum Reservieren von Trägerressourcen, umfassend:
Empfangen, durch ein Media Gateway, MG, einer Anweisung, die eine Adressressource führt, von einem Media Gateway Controller, MGC, wobei die Adressressource in einem Ereignisparameter geführt wird,
Zuweisen (801; 802) der Adressressource zum Empfangen von Trägeranforderungsnachrichten auf einer Root-Termination des MG; und
Empfangen, durch das MG, der an die Adressressource gesendeten Trägeranforderungsnachrichten und Melden (803) des entsprechenden Trägeranforderungsereignisses an den MGC;
wobei vor dem Empfangen, durch das MG, der an die Adressressource gesendeten Trägeranforderungsnachrichten das Verfahren weiterhin Folgendes umfasst:
Melden, durch das MG, der für das Empfangen der Trägeranforderungsnachrichten zugewiesenen Adressressource bei der Root-Termination an den MGC; und
Senden, durch den MGC, der Addressressource an ein Customer Premises Equipment, CPE, oder eine Netzwerkeinrichtung, die die Trägeranforderungsnachrichten sendet;
wobei die Adressressource eine Internetprotokoll-Adresse, IP-Addresse, und einen Port umfasst,
**dadurch gekennzeichnet, dass**
der Ereignisparameter einen Bearer Request Address Value-Parameter, brav-Parameter, und einen Bearer Request Port Value-Parameter, brpv-Parameter, umfasst,
der brav-Parameter definiert ist zum Anzeigen der IP-Adresse und das Format des brav-Parameters eine Stringliste ist, und
der brpv-Parameter definiert ist zum Anzeigen des Ports und das Format des brpv-Parameters eine Stringliste ist.

2. Verfahren nach Anspruch 1, **dadurch gekennzeichnet, dass** das Zuweisen der Adressressource für das Empfangen von Trägeranforderungsnachrichten bei der Root-Termination des MG Folgendes umfasst:
Empfangen einer Anweisung zum Modifizieren eines Fluss-Descriptor-Parameters bei der Root-Termination des MG von dem MGC und Zuweisen der Adressressource zum Empfangen der Trägeranforderungsnachrichten bei der Root-Termination.

3. System zum Reservieren von Trägerressourcen, umfassend einen Media Gateway, MG, und einen Media Gateway Controller, MGC, wobei:
das MG ausgelegt ist zum Zuweisen einer Adressressource zum Empfangen von Trägeranforderungsnachrichten bei einer Root-Termination des MG und Empfangen der an die Adressressource gesendeten Trägeranforderungsnachrichten und Melden eines entsprechenden Trägeranforderungsereignisses an den MGC gemäß einer empfangenen Anweisung zum Detektieren des Trägeranforderungsereignisses;
der MGC ausgelegt ist zum Senden einer Anweisung des Detektierens des Trägeranforderungsereignisses an den MG; wobei der MGC weiterhin ausgelegt ist zum Senden einer Anweisung zum Zuweisen der Adressressource und das MG ausgelegt ist zum Zuweisen der Adressressource gemäß der Anweisung, die Adressressource in einem Ereignisparameter der Anweisung geführt wird und die Adressressource eine Internetprotokoll-Adresse, IP-Adresse, und einen Port umfasst;
wobei das MG konfiguriert ist zum Melden der Adressressource an den MGC und
der MGC konfiguriert ist zum Senden der Adressressource an ein Customer Premises Equipment, CPE, oder eine Netzwerkeinrichtung, die die Trägeranforderungsnachrichten sendet,
**dadurch gekennzeichnet, dass**
der Ereignisparameter einen Bearer Request Address Value-Parameter, brav-Parameter, und einen Bearer Request Port Value-Parameter, brpv-Parameter, umfasst,
der brav-Parameter definiert ist zum Anzeigen der IP-Adresse und das Format des brav-Parameters eine Stringliste ist, und
der brpv-Parameter definiert ist zum Anzeigen des Ports und das Format des brpv-Parameters eine Stringliste ist.

4. System nach Anspruch 3, wobei der MGC weiterhin ausgelegt ist zum Autorisieren für das empfangene Trägeranforderungsereignis und Anweisen des MG zum Herstellen einer Trägerressource zum Empfangen und Übertragen von Sitzungsdaten für eine Sitzung und Senden von Informationen der hergestellten Trägerressource an den Sender der Trägeranforderungsnachrichten.

## Revendications

1. Procédé de réservation de ressources de support, comprenant :
la réception par une passerelle multimédia, MG, d'une instruction acheminant une ressource d'adresse en provenance d'un contrôleur de passerelle multimédia, MGC, la ressource d'adresse étant acheminée dans un paramètre d'événement ;
l'allocation (801 ; 802) de la ressource d'adresse pour recevoir des messages de demande de support sur une terminaison racine de la passerelle MG ; et
la réception, par la passerelle MG, des messages de demande de support envoyés à la ressource d'adresse, et le signalement (803) de l'événement correspondant de demande de support au contrôleur MGC ;
dans lequel, avant la réception par la passerelle MG, des messages de demande de support envoyés à la ressource d'adresse, le procédé comprend en outre :
le signalement, par la passerelle MG, de la ressource d'adresse allouée pour recevoir les messages de demande de support sur la terminaison racine au contrôleur MGC ; et
l'envoi, par le contrôleur MGC, de la ressource d'adresse à un Équipement de Local Client, CPE, ou à un dispositif de réseau qui envoie les messages de demande de support ;
dans lequel la ressource d'adresse comprend une adresse de Protocole Internet, IP, et
un port ;
**caractérisé en ce que**
le paramètre d'événement comprend un paramètre de Valeur d'Adresse de Demande de Support, brav, et un paramètre de Valeur de Port de Demande de Support, brpv,
le paramètre brav est défini pour indiquer l'adresse IP, et le format du paramètre brav est une liste chaînée, et
le paramètre brpv est défini pour indiquer le port et le format du paramètre brpv étant une liste chaînée.

2. Procédé selon la revendication 1, **caractérisé en ce que** l'allocation de la ressource d'adresse pour recevoir des messages de demande de support sur la terminaison racine de la passerelle MG comprend :
la réception d'une instruction de modification d'un paramètre descripteur de flux sur la terminaison racine de la passerelle MG en provenance du contrôleur MGC, et
l'allocation de la ressource d'adresse pour recevoir les messages de demande de support sur la terminaison racine.

3. Système de réservation de ressources de support, comprenant une passerelle multimédia, MG, et un contrôleur de passerelle multimédia, MGC, dans lequel :
la passerelle MG est conçue pour allouer une ressource d'adresse pour recevoir des messages de demande de support sur une terminaison racine de la passerelle MG, et pour recevoir les messages de demande de support envoyés à la ressource d'adresse, et signaler un événement correspondant de demande de support au contrôleur MGC,
conformément à une instruction reçue pour détecter l'événement de demande de support ;
le contrôleur MGC est conçu pour envoyer une instruction de détection de l'événement de demande de support à la passerelle MG ; le contrôleur MGC étant en outre apte à envoyer une instruction d'allocation de la ressource d'adresse, et la passerelle MG étant conçue pour allouer la ressource d'adresse conformément à l'instruction, la ressource d'adresse étant acheminée dans un paramètre d'événement de l'instruction, et la ressource d'adresse comprenant une adresse de Protocole Internet, IP, et un port ;
dans lequel la passerelle MG est configurée pour signaler la ressource d'adresse au contrôleur MGC ; et le contrôleur MGC est configuré pour envoyer la ressource d'adresse à un Équipement de Local Client, CPE, ou à un dispositif de réseau qui envoie les messages de demande de support,
**caractérisé en ce que**
le paramètre d'événement comprend un paramètre de Valeur d'Adresse de Demande de Support, brav, et un paramètre de Valeur de Port de Demande de Support, brpv,
le paramètre brav est défini pour indiquer l'adresse IP, et le format du paramètre brav est une liste chaînée, et
le paramètre brpv est défini pour indiquer le port et le format du paramètre brpv étant une liste chaînée.

4. Système selon la revendication 3, dans lequel le contrôleur MGC est en outre conçu pour autoriser l'événement de demande de support reçu et ordonner à la passerelle MG de créer une ressource de support pour recevoir et transmettre des données de session destinées à une session, et envoyer des informations concernant la ressource de support créée à l'émetteur des messages de demande de support.
